# FASCICULE DE BREVET EUROPEEN

(11) **EP 1 693 596 B1**
(45) Date de publication et mention de la délivrance du brevet: **12.03.2008**
(21) Numéro de dépôt: 06001656.5
(22) Date de dépôt: 26.01.2006
(51) Int. Cl.: F16F 15/22, B06B 1/16

(54) **Dispositif antivibratoire à masselottes rotatives à train épicycloïdal**
Dämpfungsvorrichtung mit rotierenden Massen und Planetengetriebe
Damping device with rotating weights and epicyclic drive

(30) Priorité: 17.02.2005 FR 0501624
(43) Date de publication de la demande: 23.08.2006
(73) Titulaire: EUROCOPTER, 13725 Marignane Cédex (FR); Artus, 49241 Avrille (FR)
(72) Inventeur: Manfredotti, Thomas, 06480 La Colle Sur Loup (FR); Quesne, Patrick, 49000 Ecouflant (FR)
(74) Mandataire: Renaud-Goud, Thierry

(56) Documents cités:
- FR-A- 2 852 648
- US-A- 3 158 038
- US-B1- 6 212 445
- PATENT ABSTRACTS OF JAPAN vol. 010, no. 105 (M-471), 19 avril 1986 (1986-04-19) & JP 60 237239 A (MITSUBISHI JUKOGYO KK), 26 novembre 1985 (1985-11-26)

## Description

La présente invention concerne un dispositif antivibratoire de type centrifuge utilisable, par exemple, à bord d'aéronefs, notamment dans la cabine d'un giravion. Néanmoins, ce dispositif peut être utilisé pour toute autre application dès l'instant où l'on souhaite réduire, voire supprimer, des vibrations engendrées par un corps en mouvement.

Les vibrations présentes dans une cabine de giravion sont essentiellement dues à la rotation du rotor principal de propulsion et de sustentation ainsi qu'à l'écoulement d'air le long du fuselage du giravion.

On connaît, par le document US 5 903 077, un dispositif antivibratoire utilisant des masselottes excentrées pour créer un effort visant à réduire les vibrations d'une structure. Il comporte deux ensembles munis chacun d'un moteur qui entraîne une paire de rotors à masselottes excentrées, le centre de gravité des rotors n'étant alors pas situé sur son axe de rotation. La rotation de chaque rotor produit un balourd tournant. Ainsi, le dispositif génère un effort résultant sinusoïdal dans la direction perpendiculaire au plan contenant les axes de rotation des rotors d'un ensemble,

L'utilisation de deux ensembles permet de générer un effort résultant réglable, de fréquence égale à la vitesse de rotation des rotors, exprimée en tours par seconde, et d'amplitude liée au déphasage angulaire des ensembles l'un par rapport à l'autre.

Néanmoins, en cas de panne d'un des moteurs, les ensembles ne tournent plus à la même vitesse ce qui implique que l'effort résultant n'est plus contrôlé. Par suite, le confort des occupants de la structure est fortement dégradé et peut même devenir plus mauvais qu'en l'absence de traitement.

Le document FR 2 852 648 a pour objet un dispositif, pour compenser une force vibratoire subie par un corps, ayant pour but premier de remédier à l'inconvénient précité. Ce dispositif comporte deux ensembles de deux rotors identiques à masselottes excentrées respectives, ces ensembles étant disposés symétriquement par rapport à un axe de symétrie et les axes de rotation des rotors étant parallèles entre eux et orthogonaux audit axe de symétrie.

Un unique moteur, à axe agencé perpendiculairement audit axe de symétrie, entraîne un lien sans fin passant par des poulies montées coaxialement sur les rotors, de sorte que les longueurs des brins du lien passant dans lesdits ensembles sont égales, pour mettre en rotation ces rotors. De plus, ce moteur est porté par un équipement mobile commandable pouvant coulisser le long dudit axe de symétrie pour entraîner le déphasage des rotors à masselottes excentrées des ensembles.

Ainsi, un effort résultant vibratoire stable, d'amplitude et d'orientation déterminées, peut être engendré par ce dispositif en déplaçant l'équipement mobile commandable, portant le moteur, le long de l'axe de symétrie, ce déplacement entraînant, via ledit lien, le déphasage angulaire progressif des rotors de chaque ensemble pour amener les masselottes excentrées jusqu'à la position souhaitée.

De plus, une panne du moteur ou une rupture du lien sans fin a pour conséquence l'arrêt total du dispositif et ne dégrade donc pas la situation.

Néanmoins, pour que le dispositif soit précis, le mouvement de translation de l'équipement mobile commandable, portant le moteur, le long de l'axe de symétrie doit être étendu. Or, ce mouvement de translation étant directement lié au diamètre des poulies, ces dernières doivent avoir une taille importante. Par conséquent, il devient difficile d'agencer ce dispositif dans un espace restreint, tel qu'une cabine de giravion, dans la mesure ou son encombrement n'est pas totalement optimisé.

La présente invention a pour objet de proposer un dispositif antivibratoire à masselottes rotatives, précis, robuste et suffisamment compact pour pouvoir être installé dans un espace exigu tel qu'une cabine de giravion.

Selon l'invention, un dispositif antivibratoire, générateur d'un effort résultant d'amplitude réglable pour réduire les vibrations d'une structure, notamment de giravion, comporte un carter fixe agencé sur la structure ainsi qu'un premier et un deuxième ensembles ayant chacun deux rotors contrarotatifs à masselottes excentrées, les quatre masselottes et les quatre rotors étant respectivement disposés sur un premier et un deuxième plans parallèles entre eux, les centres de rotation des rotors contrarotatifs représentant les coins d'un parallélogramme rectangle du deuxième plan et les axes de rotation des rotors contrarotatifs étant parallèles entre eux et orthogonaux au premier plan. Ce dispositif est remarquable en ce qu'il comporte un moteur principal fixe, solidaire du carter, dont un arbre traversant entraîne via sa première extrémité les rotors contrarotatifs du premier ensemble et via sa deuxième extrémité les rotors contrarotatifs du deuxième ensemble.

On verra par la suite que le déphasage angulaire des masselottes du deuxième ensemble par rapport aux masselottes du premier ensemble n'est pas obtenu par un mouvement de translation linéaire du moteur principal ce qui permet d'optimiser l'encombrement du dispositif.

De plus, les deux rotors de chaque ensemble étant disposés symétriquement par rapport à un axe de symétrie longitudinal, le moteur principal est agencé à l'intérieur du parallélogramme rectangle le long de l'axe de symétrie. Cette disposition augmente d'autant la compacité du dispositif.

Par ailleurs, un premier pignon orthogonal, centré sur l'axe de rotation du moteur principal, entraîne les rotors contrarotatifs à masselottes excentrées du premier ensemble lorsqu'il est mis en mouvement par l'intermédiaire du moteur principal. Ainsi, l'axe de rotation du premier pignon est disposé sur le deuxième plan tout en étant orthogonal aux axes de rotation des rotors contrarotatifs du premier ensemble ce qui correspond au terme « pignon orthogonal » retenu dans ce texte par commodité.

A cet effet, la première extrémité de l'arbre traversant du moteur principal comporte un premier pignon planétaire pour mettre en mouvement une première couronne externe solidaire en rotation du premier pignon orthogonal. La vitesse de rotation du moteur principal pouvant être élevée, le dispositif selon l'invention comporte un réducteur de vitesse à savoir au moins un premier pignon satellite agencé sur un premier porte satellite fixe et disposé entre le premier pignon planétaire et la première couronne externe. Le nombre de pignons satellites dépend notamment de la vitesse de rotation du moteur principal ainsi que de la vitesse de rotation des rotors à masselottes excentrées du premier ensemble à atteindre.

De même, un deuxième pignon orthogonal entraîne les rotors contrarotatifs à masselottes excentrées du deuxième ensemble lorsqu'il est mis en mouvement par l'intermédiaire du moteur principal. L'axe de rotation du deuxième pignon orthogonal est lui aussi disposé sur le deuxième plan tout en étant orthogonal aux axes de rotation des rotors contrarotatifs du deuxième ensemble.

La deuxième extrémité de l'arbre traversant du moteur principal comporte ainsi un deuxième pignon planétaire pour mettre en mouvement une deuxième couronne externe solidaire en rotation du deuxième pignon orthogonal.

Pour pouvoir régler l'effort résultant du dispositif, les rotors à masselottes excentrées du deuxième ensemble sont déphasables angulairement par rapport à celles du premier ensemble. Le déphasage varie de 0 à 180° afin de permettre une évolution de l'effort résultant d'une valeur maximale à une valeur nulle en fonction du besoin. Par conséquent, le dispositif selon l'invention comporte un moyen de déphasage pour ralentir ou accélérer, au moins temporairement, la vitesse de rotation des rotors à masselottes excentrées du deuxième ensemble de manière à déphaser angulalrement les rotors à masselottes excentrées du deuxième ensemble par rapport aux rotors à masselottes excentrées du premier ensemble. Dès que le déphasage souhaité est obtenu, le moyen de déphasage n'agit plus et les quatre rotors à masselottes excentrées tournent à une vitesse identique qui est proportionnelle à la vitesse de rotation du moteur principal.

Ce moyen de déphasage est rotatif et comporte au moins un deuxième pignon satellite, agencé sur un deuxième porte satellite mobile en rotation par rapport à la deuxième extrémité, disposé entre le deuxième pignon planétaire et la deuxième couronne externe. En faisant tourner le deuxième porte satellite et le deuxième pignon satellite associé, par l'intermédiaire d'un moteur secondaire fixe, dans le sens senestrorsum ou dextrorsum, on augmente ou on réduit la vitesse de rotation du groupe deuxième couronne externe/deuxième pignon orthogonal/rotors contrarotatifs à masselottes excentrées du deuxième ensemble ce qui a pour conséquence le déphasage angulaire de ces masselottes par rapport aux masselottes excentrées du premier ensemble.

Selon l'espace disponible autour du dispositif, deux modes de réalisations sont envisageables, un premier mode où les moteurs secondaire et principal sont concentriques et un deuxième mode où les moteurs secondaire et principal sont agencés successivement le long de l'axe de symétrie longitudinal décrit précédemment.

Pour automatiser le dispositif, un calculateur déphase angulairement les rotors à masselottes excentrées du deuxième ensemble par rapport aux rotors à masselottes excentrées du premier ensemble en fonction de signaux, provenant d'une pluralité de capteurs, et du niveau vibratoire de la structure.

Enfin, la géométrie des masselottes est aussi optimisée pour que l'encombrement du dispositif soit minimisé. Chaque ensemble comporte donc un rotor ayant une masselotte épaisse munie de deux portions de disque identiques séparées par une gorge, l'autre rotor ayant alors une masselotte fine munie d'une unique portion de disque ayant une épaisseur légèrement inférieure à celle de ladite gorge, les masselottes fine et épaisse étant bien évidemment de masse identique. Ainsi, les masselottes excentrées des rotors d'un ensemble peuvent se chevaucher ce qui limite l'encombrement du dispositif. De plus, la distance séparant le centre de gravité de la masselotte fine de son axe de rotation est avantageusement égale à la distance séparant le centre de gravité de la masselotte épaisse de son axe de rotation.

L'invention et ses avantages apparaîtront avec plus de détails dans le cadre de la description suivante, qui Illustre des exemples de réalisation préférés, donnés sans aucun caractère limitatif, en référence aux figures annexées qui représentent :
- les figures 1,2 et 3, des schémas explicitant le principe de fonctionnement de l'invention,
- la figure 4, un premier mode de réalisation du dispositif selon l'invention,
- la figure 5, un deuxième mode de réalisation du dispositif selon l'invention,
- la figure 6, une vue isométrique du dispositif, et
- la figure 7, une vue présentant la géométrie des masselottes.

Les éléments présents dans plusieurs figures distinctes sont affectés d'une seule et même référence.

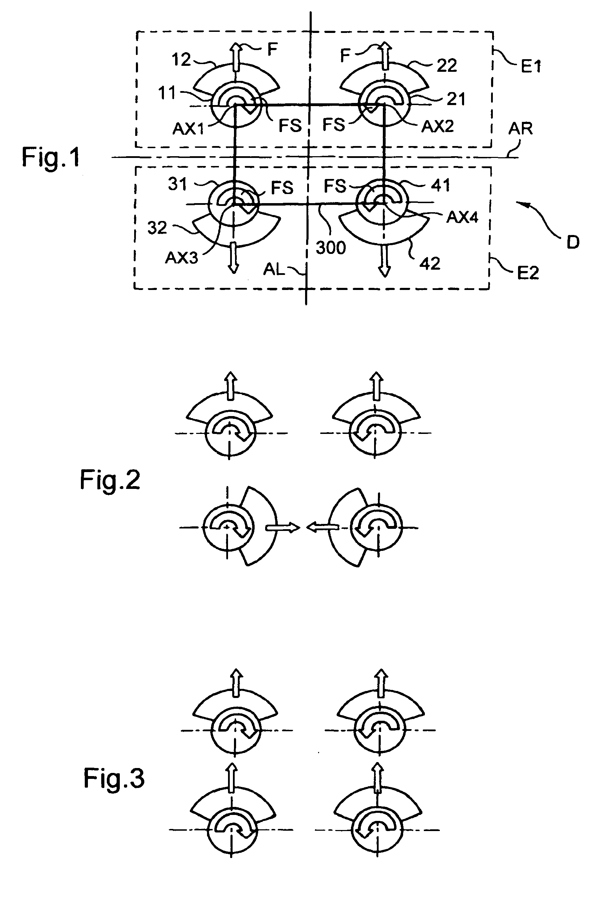

Les figures 1,2 et 3 présentent le principe de fonctionnement du dispositif D antivibratoire à masselottes excentrées selon l'invention.

Ce dispositif D comporte deux ensembles E1,E2. Le premier ensemble E1 est muni de deux rotors 11,21 respectivement à masselottes excentrées 12,22. De même, le deuxième ensemble E2 est pourvu de deux rotors 31,41 à masselottes excentrées 32,42.

Avantageusement, les quatre rotors sont identiques et les quatre masselottes ont une masse égale.

De plus, les quatre rotors et les quatre masselottes sont respectivement agencés sur un deuxième 200 et un premier 100 plans, parallèles entre eux, et les axes de rotations AX1, AX2, AX3, AX4 respectifs des rotors 11, 21, 31, 41 à masselottes excentrées 12, 22, 32, 42 sont parallèles entre eux ainsi qu'orthogonaux aux premier 100 et deuxième 200 plans. De plus, chaque rotor 11, 21, 31, 41 et sa masselotte excentrée 12, 22, 32, 42 associée étant disposés coaxialement, les axes de rotation AX1, AX2, AX3, AX4 représentent respectivement les axes de rotations des rotors 11, 21, 31,41 mais aussi de leur masselotte excentrée 12, 22, 32, 42 associée.

En outre, les centres de rotation des rotors 11, 21, 31,41 constituent les coins d'un parallélogramme rectangle 300 du deuxième plan 200.

Par ailleurs, les rotors 11,21 et 31,41 à masselottes excentrées 12,22 et 32,42 d'un même ensemble sont symétrlques par rapport à un axe de symétrie longitudinal AL et tournent de manière contrarotative comme indiqué à l'aide des flèches FS, les rotors 11,31 et 21,41 en vis-à-vis, par rapport à un axe AR, des premier E1 et deuxième E2 ensembles ayant le même sens de rotation.

De la sorte, chaque masselotte 12, 22, 32, 42 crée un effort centrifuge tournant F.

En utilisant un unique ensemble E1 ou E2 de deux masselottes contrarotatives 12,22 ou 32,42 ayant une même vitesse de rotation, on obtient un générateur d'efforts sinusoïdaux dont l'effort résultant est perpendiculaire aux axes de rotation des deux masselottes de l'ensemble en étan't aligné sur l'axe de symétrie longitudinal AL contenu dans le premier plan 100. Ce générateur d'efforts permet de réduire, voire même d'annuler, le niveau vibratoire d'une structure, Néanmoins, il n'autorise pas le réglage de l'amplitude de l'effort résultant.

Pour y remédier, il est donc nécessaire d'utiliser deux ensembles E1,E2 de deux masselottes contrarotatives 12,22 et 32,42 alignés, ces masselottes 12,22,32,42 tournant à la même vitesse. En déphasant angulairement les masselottes du deuxième ensemble E2 par rapport aux masselottes du premier ensemble E1, il est possible de faire varier l'effort résultant d'une valeur maximale à une valeur nulle.

En référence à la figure 1, le déphasage est de 180°, ce qui conduit à un effort résultant nul.

En référence à la figure 2, le déphasage est de 90°. L'effort résultant correspond alors à deux fois l'effort centrifuge d'une masselotte.

Enfin, en référence à la figure 3, le déphasage est de 0°. L'effort résultant est maximal et correspond alors à quatre fois l'effort centrifuge d'une masselotte.

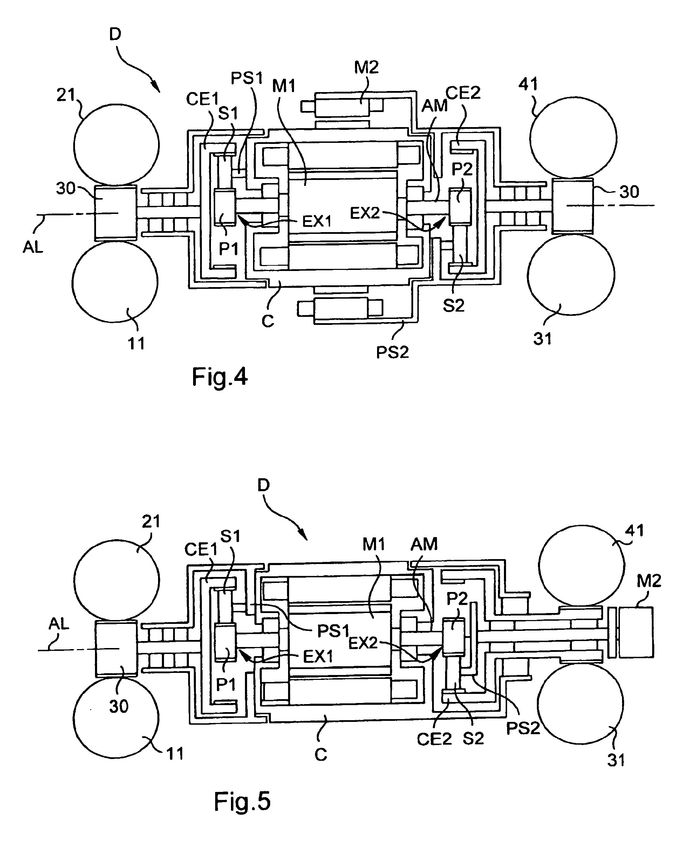

La figure 4 présente un premier mode de réalisation du dispositif D.

Ce dernier comporte un carter C fixé sur une structure non représentée. Un moteur principal M1, solidaire du carter C et agencé entre les deux ensembles E1, E2 le long de l'axe de symétrie longitudinal AL, autorise la mise en rotation des rotors 11,21,31,41.

Par suite, un arbre AM, pourvu d'un premier P1 et d'un deuxième P2 pignons planétaires respectivement à ces première EX1 et deuxième EX2 extrémités, traverse le moteur principal M1 selon l'axe de symétrie longitudinal AL.

Le premier pignon planétaire P1 entraîne une première couronne externe CE1 solidaire en rotation d'un premier pignon orthogonal 30 qui transmet le mouvement de rotation aux rotors 11,21 à masselottes excentrées 12,22 du premier ensemble E1. La vitesse de rotation du moteur principal étant importante, un réducteur de vitesse de type satellite est prévu. Ce dernier est composé d'au moins un premier pignon satellite S1, agencé sur un porte satellite PS1 fixe et solidaire du carter C. Le premier pignon satellite S1 coopère avec le premier pignon planétaire P1 et la première couronne externe CE1.

Le nombre de pignons satellites est directement lié à la puissance du moteur principal.

Par ailleurs, le deuxième pignon planétaire P2 entraîne une couronne externe CE2 solidaire en rotation d'un deuxième pignon orthogonal 30 qui transmet le mouvement de rotation aux rotors 31,41 à masselottes excentrées 32,42 du deuxième ensemble E2.

De plus, un moyen de déphasage permet d'augmenter ou de réduire transitoirement la vitesse de rotation des rotors 31,41 du deuxième ensemble E2 par rapport à la vitesse de rotation des rotors 11,21 du premier ensemble E1 de manière à modifier l'amplitude de l'effort résultant produit par le dispositif D. Une fols le déphasage effectué, le moyen de déphasage reste fixe afin que les rotors 31,41 du deuxième ensemble E2 et les rotors 11,21 du premier ensemble E1 tournent à la même vitesse.

Ce moyen de déphasage consiste en au moins un deuxième pignon satellite S2, agencé sur un deuxième porte satellite PS2 mobile en rotation autour de la deuxième extrémité EX2, qui coopère avec le deuxième pignon planétaire P2 et la deuxième couronne externe CE2.

Dans ce premier mode de réalisation, le deuxième porte satellite PS2 est mis en rotation par l'intermédiaire d'un moteur secondaire M2 concentrique au moteur principal M1.

On notera qu'un déphasage angulaire des masselottes du deuxième ensemble E2 de 180° par exemple, ne correspond pas nécessairement à une rotation de 180° du deuxième porte satellite PS2. En effet, il faut notamment prendre en compte les diamètres des différents pignons. Ainsi, pour obtenir ce déphasage de 180°, il peut être nécessaire de faire tourner le deuxième porte satellite de plusieurs tours par exemple.

Pour que le dispositif D fonctionne correctement en régime stabilisé, les quatre rotors 11, 21, 31, 41, entraînés par l'unique moteur principal M1, doivent tourner à la même vitesse de rotation. Les premier P1 et deuxième P2 pignons planétaires sont alors avantageusement identiques, et il en va de même pour les premier S1 et deuxième S2 pignons satellites (en nombre et en dimension), les première CE1 et deuxième CE2 couronnes externes et les pignons orthogonaux 30.

Par ailleurs, des capteurs non représentés envoient des signaux, relatifs aux phases des masselottes et/ou aux positions des moteurs principal M1 et secondaire M2 notamment s'ils sont de type sans balai (dénommés « brushless » par l'homme du métier en langue anglaise), à un calculateur non représenté sur une figure. Ce dernier, recevant en outre des informations relatives aux vibrations de la structure sur laquelle le dispositif est agencé, est alors à même de commander les moteurs principal M1 et secondaire M2 afin d'optimiser l'effort résultant produit par le dispositif pour réduire lesdites vibrations.

La figure 4 est une vue schématique. Par suite, elle ne montre pas l'ensemble des pièces mécaniques du dispositif. On comprend toutefois que des moyens usuels (vis, paliers, roulement à billes et autres) sont présents de manière à n'autoriser qu'un mouvement rotatif autour de leurs axes de rotation aux éléments tournants suivants : arbre traversant AM du moteur principal M1, premier et deuxième pignons planétaires P1,P2, premier et deuxième pignons satellites S1,S2, première et deuxième couronne externe CE1, CE2, pignons orthogonaux 30 et rotors 11,21,31,41 à masselottes excentrées 12,22,32,42. Les autres éléments sont solidaires du carter C par des moyens usuels.

En référence à la figure 5, selon un deuxième mode de réalisation, les moteurs principal M1 et secondaire M2 ne sont pas concentriques mais en ligne, c'est-à-dire agencés successivement le long de l'axe de symétrie longitudinale AL.

Par ailleurs, des capteurs envoient des signaux, relatifs aux phases des masselottes et aux posltlons des moteurs principal M1 et secondaire M2, à un calculateur non représenté.

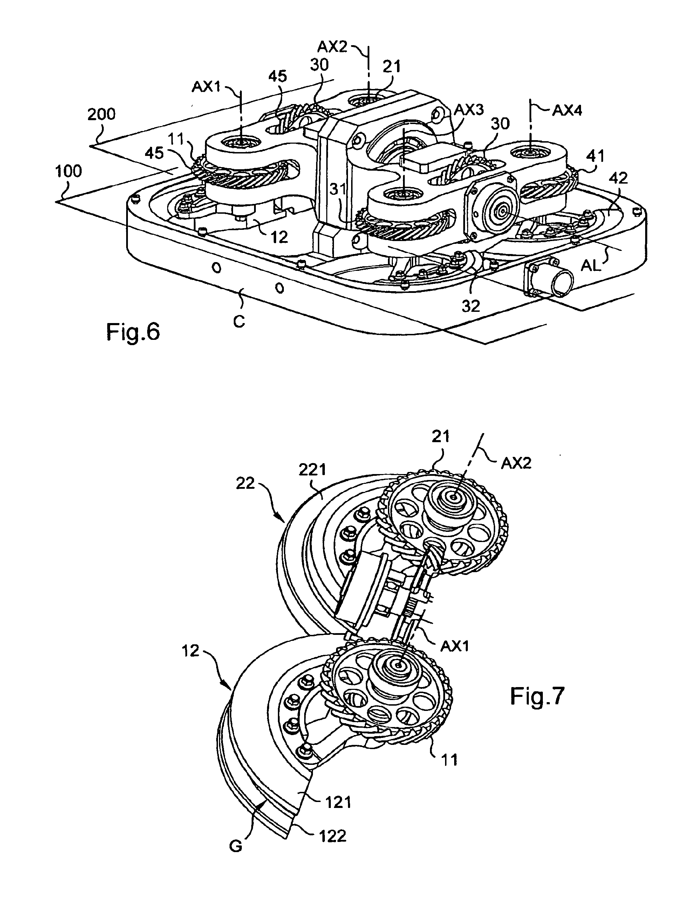

La figure 6 présente une vue isométrlqus qui montre clairement la compacité du dispositif D.

Les quatre rotors 11,21,31,41 sont positionnés dans le même deuxième plan 200. De même, les masselottes excentrées associées 12,22,32,42 sont positionnées dans le premier plan 100.

De plus, les axes de rotations AX1, AX2, AX3, AX4 respectifs des rotors 11,21,31,41 sont parallèles entre eux et orthogonaux aux premier 100 et deuxième 200 plans.

Les deux rotors 11,21 et 31,41 de chaque ensemble E1, E2 sont entraînés de façon contrarotatives par un pignon orthogonal 30. L'axe de rotation de ces pignons orthogonal 30 correspond à l'axe de symétrie longitudinal AL disposé sur le deuxième plan 200.

De plus, pour permettre un entraînement de qualité, les dentures 45 des pignons orthogonal 30 et des rotors 11, 21, 31,41 présentent une angulation par rapport à leur axe de rotation respectif et correspondent par exemple à des dentures hélicoïdales à axes perpendiculaires.

En outre, le carter C présente avantageusement une partie supérieure non représentée qui couvre le dispositif, notamment les éléments tournants.

La figure 7 est une vue présentant la géométrie des masselottes d'un ensemble.

Plus précisément, il s'agit de décrire l'ensemble E1 pourvu des rotors 11,21 à masselottes excentrées 12,22. Néanmoins, la description qui suit est aussi valable pour les masselottes excentrées 32,42 des rotors 31,41 du deuxième ensemble E2.

L'ensemble E1 comporte une masselotte épaisse, en l'occurrence la masselotte excentrée 12, et une masselotte fine, la masselotte excentrée 22.

La masselotte épaisse 12 est munie de deux portions de disque 121,122 séparées par une gorge G. Par ailleurs, la masselotte fine 22 comporte une unique portion de disque 221, cette dernière ayant une épaisseur légèrement inférieure à la gorge G de manière à ce que les masselottes épaisse 12 et fine 22 puissent se chevaucher partiellemént, la portion de disque 221 coopérant avec la gorge G. Ainsi, la distance séparant les axes de rotation AX1,AX2 des rotors 11,21 à masselottes excentrées 12,22 est minimisée ce qui diminue d'autant l'encombrement du dispositif D.

Néanmoins, les masses des deux masselottes d'un ensemble restent égales, Ainsi, l'épaisseur de la portion de disque 221 de la masselotte fine 22 est avantageusement sensiblement égale à la somme des épaisseurs des deux portions de disque 121,122 de la masselotte épaisse 12.

En outre, la distance séparant le centre de gravité de la masselotte fine 22 de son axe de rotation AX2 est égale à la distance séparant le centre de gravité de la masselotte épaisse 12 de son axe de rotation AX1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, l'invention restant définie par les revendications telles qu'annexées.

## Revendications

1. Dispositif antivibratoire (D) pour réduire les vibrations d'une structure comportant un carter fixe (C) agencée sur la structure ainsi qu'un premier (E1) et un deuxième (E2) ensembles ayant chacun deux rotors (11 , 21) et (31,41) contrarotatifs à masselottes excentrées (12,22) et (32,42), lesdites masselottes (12,22,32,42,) et lesdits rotors (11,21,31,41,) étant respectivement disposés sur un premier (100) et un deuxième (200) plans parallèles entre eux, les centres de rotation desdits rotors (11,21,31,41) contrarotatifs représentant les coins d'un parallélogramme rectangle (300) dudit deuxième plan (200) et les axes de rotation (AX1,AX2,AX3,AX4) desdits rotors (11,21,31,41) contrarotatifs étant parallèles entre eux et orthogonaux audit premier plan (100),
**caractérisé en ce qu**'il comporte un moteur principal (M1) fixe, solidaire dudit carter (C), dont un arbre traversant (AM) entraîne via sa première extrémité (EX1) lesdits rotors (11,21) contrarotatifs dudit premier ensemble (E1) et via sa deuxième extrémité (EX2) lesdits rotors (31,41) contrarotatifs dudit deuxième ensemble (E2).

2. Dispositif selon la revendication 1,
**caractérisé en ce que**, les deux rotors (11,21) et (31,41) de chaque ensemble (E1,E2) étant disposés symétriquement par rapport à un axe de symétrie longitudinale (AL), ledit moteur principal (M1) est agencé à l'intérieur dudit parallélogramme rectangle (300) le long dudit axe de symétrie (AL).

3. Dispositif selon l'une quelconque des revendications précédentes,
**caractérisé en ce qu**'il comporte un premier pignon orthogonal (30) qui entraîne lesdits rotors (11,21) contrarotatifs à masselottes excentrées (12,22) dudit premier ensemble (E1) lorsqu'il est mis en mouvement par l'intermédiaire dudit moteur principal (M1), l'axe de rotation dudit premier pignon orthogonal étant disposé sur ledit deuxième plan (200) et étant orthogonal aux dits axes de rotation (AX1, AX2) desdits rotors (11,21) contrarotatifs dudit premier ensemble (E1).

4. Dispositif selon la revendication 3,
**caractérisé en ce que** ladite première extrémité (EX1) dudit arbre traversant (AM) comporte un premier pignon planétaire (P1) pour mettre en mouvement une première couronne externe (CE1) solidaire en rotation dudit premier pignon orthogonal (30).

5. Dispositif selon la revendication 4,
**caractérisé en ce qu**'il comporte un réducteur pour réduire la vitesse de rotation desdits rotors (11,21) à masselottes excentrées (12,22) dudit premier ensemble (E1).

6. Dispositif selon la revendication 5,
**caractérisé en ce que** ledit réducteur comporte au moins un premier pignon satellite (S1), agencé sur un premier porte satellite (PS1) fixe, disposé entre le premier pignon planétaire (P1) et la première couronne externe (CE1).

7. Dispositif selon l'une quelconque des revendications précédentes,
**caractérisé en ce qu**'il comporte un deuxième pignon orthogonal (30) qui entraîne lesdits rotors (31,41) contrarotatifs à masselottes excentrées (32,42) dudit deuxième ensemble (E2) lorsqu'il est mis en mouvement par l'intermédiaire dudit moteur principal (M1), l'axe de rotation dudit deuxième pignon orthogonal (30) étant disposé sur ledit deuxième plan (200) et étant orthogonal aux dits axes de rotation (AX3,AX4) desdits rotors (31,41) contrarotatifs dudit deuxième ensemble (E2).

8. Dispositif selon la revendication 7,
**caractérisé en ce que** ladite deuxième extrémité (EX2) dudit arbre traversant (AM) comporte un deuxième pignon planétaire (P2) pour mettre en mouvement une deuxième couronne externe (CE2) solidaire en rotation dudit deuxième pignon orthogonal (30).

9. Dispositif selon la revendication 8,
**caractérisé en ce qu**'il comporte un moyen de déphasage pour ralentir ou accélérer, au moins temporairement, la vitesse de rotation desdits rotors (31,41) à masselottes excentrées (32,42) dudit deuxième ensemble (E2) de manière à les déphaser angulairement par rapport aux rotors (11,21) à masselottes excentrées (12,22) dudit premier ensemble (E1).

10. Dispositif selon la revendication 9,
**caractérisé en ce que** ledit moyen de déphasage comporte au moins un deuxième pignon satellite (S2), agencé sur un deuxième porte satellite (PS2) mobile en rotation par rapport à ladite deuxième extrémité (EX2), disposé entre le deuxième pignon planétaire (P2) et la deuxième couronne externe (CE2).

11. Dispositif selon la revendication 10,
**caractérisé en ce que** ledit deuxième porte satellite (PS2) est mis en mouvement par un moteur secondaire (M2).

12. Dispositif selon la revendication 11,
**caractérisé en ce que** lesdits moteurs secondaire (M2) et principal (M1) sont concentriques.

13. Dispositif selon la revendication 11,
**caractérisé en ce que**, les deux rotors (11, 21) et (31,41) de chaque ensemble (E1) et (E2) étant disposés symétriquement autour d'un axe de symétrie longitudinale (AL), lesdits moteurs secondaire (M2) et principal (M1) sont agencés successivement le long dudit axe de symétrie longitudinale (AL).

14. Dispositif selon l'une quelconque des revendications précédentes,
**caractérisé en ce qu**'il comporte un calculateur qui déphase angulairement les rotors (31,41) à masselottes excentrées (32,42) dudit deuxième ensemble (E2) par rapport aux rotors (11,21) à masselottes excentrées (12,22) dudit premier ensemble (E1) en fonction de signaux provenant d'une pluralité de capteurs.

15. Dispositif selon l'une quelconque des revendications précédentes,
**caractérisé en ce que** chaque ensemble (E1,E2) comporte un rotor ayant une masselotte excentrée épaisse munie de deux portions de disque (121,122) identiques séparées par une gorge (G), l'autre rotor ayant alors une masselotte excentrée fine munie d'une unique portion de disque (221) ayant une épaisseur légèrement inférieure à celle de ladite gorge (G), les masselottes fine et épaisse étant de masse identique.

## Claims

1. An antivibration device (D) for reducing the vibrations of a structure, including a fixed casing (C) which is arranged on the structure, and a first and a second assembly (E1, E2) each having two counter-rotating rotors (11, 21) and (31, 41) which have eccentric flyweights (12, 22) and (32, 42), the said flyweights (12, 22, 32, 42) and the said rotors (11, 21, 31, 41) being respectively arranged in a first plane (100) and a second plane (200) which are parallel to one another, the centres of rotation of the said counter-rotating rotors (11, 21, 31, 41) representing the corners of a rectangular parallelogram (300) in the said second plane (200) and the axes of rotation (AX1, AX2, AX3, AX4) of the said counter-rotating rotors (11, 21, 31, 41) being parallel to one another and at a right angle to the said first plane (100), **characterised in that** it includes a fixed main motor (M1) which is integrally secured to the said casing (C), a through shaft (AM) thereof driving by way of its first end (EX1) the said counter-rotating rotors (11, 21) of the said first assembly (E1) and by way of its second end (EX2) the said counter-rotating rotors (31, 41) of the said second assembly (E2).

2. A device according to Claim 1, **characterised in that** the two rotors (11,21) and (31, 41) of each assembly (E1, E2) are arranged symmetrically in relation to a longitudinal axis of symmetry (AL), and the said main motor (M1) is arranged inside the said rectangular parallelogram (300) along the said axis of symmetry (AL).

3. A device according to either of the preceding claims, **characterised in that** it includes a first right-angled gear wheel (30) which drives the said counter-rotating rotors (11, 21), which have eccentric flyweights (12, 22), of the said first assembly (E1) when it is moved by way of the said main motor (M1), the axis of rotation of the said first right-angled gear wheel being arranged in the said second plane (200) and being at a right angle to the said axes of rotation (AX1, AX2) of the said counter-rotating rotors (11, 21) of the said first assembly (E1).

4. A device according to Claim 3, **characterised in that** the said first end (EX1) of the said through shaft (AM) includes a first planetary gear wheel (P1) for moving a first outer ring gear (CE1) which is fixed in rotation with the said first right-angled gear wheel (30).

5. A device according to Claim 4, **characterised in that** it includes a step-down gear for reducing the speed of rotation of the said rotors (11,21), which have eccentric flyweights (12, 22), of the said first assembly (E1).

6. A device according to Claim 5, **characterised in that** the said step-down gear includes at least one first satellite gear wheel (S1) which is arranged on a first fixed satellite bearing means (PS1) which is arranged between the first planetary gear wheel (P1) and the first outer crown gear (CE1).

7. A device according to any one of the preceding claims, **characterised in that** it includes a second right-angled gear wheel (30) which drives the said counter-rotating rotors (31, 41), which have eccentric flyweights (32, 42), of the said second assembly (E2) when it is moved by way of the said main motor (M1), the axis of rotation of the said second right-angled gear wheel (30) being arranged in the said second plane (200) and being at a right angle to the said axes of rotation (AX3, AX4) of the said counter-rotating rotors (31, 41) of the said second assembly (E2).

8. A device according to Claim 7, **characterised in that** the said second end (EX2) of the said through shaft (AM) includes a second planetary gear wheel (P2) for moving a second outer ring gear (CE2) which is fixed in rotation with the said second right-angled gear wheel (30).

9. A device according to Claim 8, **characterised in that** it includes a phase offset means for at least temporarily slowing down or speeding up the speed of rotation of the said rotors (31, 41), which have eccentric flyweights (32, 42), of the said second assembly (E2) such that the phase thereof is angularly offset in relation to the rotors (11, 21), which have eccentric flyweights (12, 22), of the said first assembly (E1).

10. A device according to Claim 9, **characterised in that** the said phase offset means includes at least a second satellite gear wheel (S2) which is arranged on a second satellite bearing means (PS2) which is movable in rotation in relation to the said second end (EX2) and is arranged between the second planetary gear wheel (P2) and the second outer crown gear (CE2).

11. A device according to Claim 10, **characterised in that** the said second satellite bearing means (PS2) is moved by a secondary motor (M2).

12. A device according to Claim 11, **characterised in that** the said secondary motor (M2) and the said main motor (M1) are concentric.

13. A device according to Claim 11, **characterised in that** the two rotors (11, 21) and (31, 41) of each assembly (E1) and (E2) are arranged symmetrically about a longitudinal axis of symmetry (AL), and the said secondary motor (M2) and the said main motor (M1) are arranged successively along the said longitudinal axis of symmetry (AL).

14. A device according to any one of the preceding claims, **characterised in that** it includes a computer which performs an angular phase offset of the rotors (31, 41), which have eccentric flyweights (32, 42), of the said second assembly (E2) in relation to the rotors (11, 21), which have eccentric flyweights (12, 22), of the said first assembly (E1) in dependence on signals from a plurality of sensors.

15. A device according to any one of the preceding claims, **characterised in that** each assembly (E1, E2) includes a rotor having a thick eccentric flyweight which is equipped with two identical disc portions (121, 122) which are separated by a groove (G), the other rotor in this case having a thin eccentric flyweight which is equipped with a single disc portion (221) which is slightly less thick than the said groove (G), the thin and thick flyweights having identical mass.

## Patentansprüche

1. Vibrationshemmende Vorrichtung (D) zur Verringerung der Vibrationen einer Struktur, die ein auf der Struktur angeordnetes ortsfestes Gehäuse (C), sowie eine erste (E1) und eine zweite Einheit (E2) aufweist, die je zwei gegenläufige Rotoren (11, 21) und (31, 41) mit exzentrischen Ausgleichsgewichten (12, 22) und (32, 42) haben, und die Ausgleichsgewichte (12, 22, 32, 42) und die Rotoren (11, 21, 31, 41) je auf einer ersten (100) bzw. zweiten (200) zueinander parallelen Ebene angeordnet sind, wobei die Drehzentren der gegenläufigen Rotoren (11, 21, 31, 41) die Ecken eines rechtwinkligen Parallelogramms (300) der zweiten Ebene (200) darstellen, und die Drehachsen (AX1, AX2, AX3, AX4) der gegenläufigen Rotoren (11, 21, 31, 41) parallel zueinander und orthogonal zur ersten Ebene (100) sind,
**dadurch gekennzeichnet, dass** sie einen ortsfesten Hauptmotor (M 1) aufweist, der fest mit dem Gehäuse (C) verbunden ist, von dem eine Durchtriebswelle (AM) über ihr erstes Ende (EX1) die gegenläufigen Rotoren ( 11, 21) der ersten Einheit (E1) und über ihr zweites Ende (EX2) die gegenläufigen Rotoren (31, 41) der zweiten Einheit (E2) antreibt.

2. Vorrichtung nach Anspruch 1,
**dadurch gekennzeichnet, dass** bei symmetrischer Anordnung der zwei Rotoren (11, 21) und (31, 41) jeder Einheit (E1, E2) bezüglich einer Längssymmetrieachse (AL) der Hauptmotor (M1) innerhalb des rechtwinkligen Parallelogramms (300) entlang der Symmetrieachse (AL) angeordnet ist.

3. Vorrichtung nach einem der vorhergehenden Ansprüche,
**dadurch gekennzeichnet, dass** sie ein erstes orthogonales Zahnrad (30) aufweist, das die gegenläufigen Rotoren (11, 21) mit exzentrischen Ausgleichsgewichten (12, 22) der ersten Einheit (E1) antreibt, wenn es mittels des Hauptmotors (M1) in Bewegung versetzt wird, wobei die Drehachse des ersten orthogonalen Zahnrads auf der zweiten Ebene (200) angeordnet und zu den Drehachsen (AX1, AX2) der gegenläufigen Rotoren (11, 21) der ersten Einheit (E1) orthogonal ist.

4. Vorrichtung nach Anspruch 3,
**dadurch gekennzeichnet, dass** das erste Ende (EX1) der Durchtriebswelle (AM) ein erstes Planetenrad (P1) aufweist, um einen ersten äußeren Kranz (CE1) in Bewegung zu versetzen, der in Drehung fest mit dem ersten orthogonalen Zahnrad (30) verbunden ist.

5. Vorrichtung nach Anspruch 4,
**dadurch gekennzeichnet, dass** sie einen ersten Reduzierer aufweist, um die Drehgeschwindigkeit der Rotoren (11, 21) mit exzentrischen Ausgleichsgewichten (12, 22) der ersten Einheit (E1) zu reduzieren.

6. Vorrichtung nach Anspruch 5,
**dadurch gekennzeichnet, dass** der Reduzierer mindestens ein erstes Satellitenrad (S1) aufweist, das auf einem ersten ortsfesten Satellitenradträger (PS 1) eingerichtet und zwischen dem ersten Planetenrad (P1) und dem ersten äußeren Kranz (CE1) angeordnet ist.

7. Vorrichtung nach einem der vorhergehenden Ansprüche,
**dadurch gekennzeichnet, dass** sie ein zweites orthogonales Zahnrad (30) aufweist, das die gegenläufigen Rotoren (31, 41) mit exzentrischen Ausgleichsgewichten (32, 42) der zweiten Einheit (E2) antreibt, wenn es mittels des Hauptmotors (M1) in Bewegung versetzt wird, wobei die Drehachse des zweiten orthogonalen Zahnrads (30) auf der zweiten Ebene (200) angeordnet und zu den Drehachsen (AX3, AX4) der gegenläufigen Rotoren (31, 41) der zweiten Einheit (E2) orthogonal ist.

8. Vorrichtung nach Anspruch 7,
**dadurch gekennzeichnet, dass** das zweite Ende (EX2) der Durchtriebswelle (AM) ein zweites Planetenrad (P2) aufweist, um einen zweiten äußeren Kranz (CE2) in Bewegung zu versetzen, der in Drehung fest mit dem zweiten orthogonalen Zahnrad (30) verbunden ist.

9. Vorrichtung nach Anspruch 8,
**dadurch gekennzeichnet, dass** sie eine Phasenverschiebungseinrichtung aufweist, um zumindest zeitweise die Drehgeschwindigkeit der Rotoren (31, 41) mit exzentrischen Ausgleichsgewichten (32, 42) der zweiten Einheit (E2) zu verlangsamen oder zu beschleunigen, um sie winkelmäßig bezüglich der Rotoren (11, 21) mit exzentrischen Ausgleichsgewichten (12, 22) der ersten Einheit (E1) außer Phase zu bringen.

10. Vorrichtung nach Anspruch 9,
**dadurch gekennzeichnet, dass** die Phasenverschiebungseinrichtung mindestens ein zweites Satellitenrad (S2) aufweist, das auf einem zweiten, bezüglich des zweiten Endes (EX2) drehbeweglichen Satellitenradträger (PS2) eingerichtet und zwischen dem zweiten Planetenrad (P2) und dem zweiten äußeren Kranz (CE2) angeordnet ist.

11. Vorrichtung nach Anspruch 10,
**dadurch gekennzeichnet, dass** der zweite Satellitenradträger (PS2) von einem Nebenmotor (M2) in Bewegung versetzt wird.

12. Vorrichtung nach Anspruch 11,
**dadurch gekennzeichnet, dass** der Nebenmotor (M2) und der Hauptmotor (M1) konzentrisch sind.

13. Vorrichtung nach Anspruch 11,
**dadurch gekennzeichnet, dass** bei symmetrischer Anordnung der zwei Rotoren (11, 21) und (31, 41) jeder Einheit (E1) und (E2) um eine Längssymmetrieachse (AL) der Nebenmotor (M2) und der Hauptmotor (M1) nacheinander entlang der Längssymmetrieachse (AL) angeordnet sind.

14. Vorrichtung nach einem der vorhergehenden Ansprüche,
**dadurch gekennzeichnet, dass** sie einen Rechner aufweist, der die Rotoren (31, 41) mit exzentrischen Ausgleichsgewichten (32, 42) der zweiten Einheit (E2) bezüglich der Rotoren (11, 21) mit exzentrischen Ausgleichsgewichten (12, 22) der ersten Einheit (E1) in Abhängigkeit von Signalen, die von mehreren Sensoren kommen, außer Phase bringt.

15. Vorrichtung nach einem der vorhergehenden Ansprüche,
**dadurch gekennzeichnet, dass** jede Einheit (E1, E2) einen Rotor aufweist, der ein dickes exzentrisches Ausgleichsgewicht hat, das mit zwei gleichen Scheibenabschnitten (121, 122) versehen ist, die durch eine Kehle (G) getrennt sind, während der andere Rotor dann ein mit einem einzigen Scheibenabschnitt (221) versehenes, dünnes exzentrisches Ausgleichsgewicht hat, das eine Dicke geringfügig geringer als diejenige der Kehle (G) hat, wobei das dünne und das dicke Ausgleichsgewicht die gleiche Masse haben.
